# EUROPÄISCHE PATENTSCHRIFT

(11) **EP 1 005 513 B1**
(45) Veröffentlichungstag und Bekanntmachung des Hinweises auf die Patenterteilung: **12.02.2003**
(21) Anmeldenummer: 98946306.2
(22) Anmeldetag: 08.08.1998
(51) Int. Cl.: C09J 4/00, C08F 222/32

(54) **THERMOSTABILE CYANACRYLAT-VERKLEBUNGEN**
THERMOSTABLE CYANOACRYLATE ADHESIVES
PRODUITS ADHESIFS A BASE DE CYANOACRYLATE THERMIQUEMENT STABLES

(30) Priorität: 18.08.1997 DE 19735782
(43) Veröffentlichungstag der Anmeldung: 07.06.2000
(73) Patentinhaber: Henkel Kommanditgesellschaft auf Aktien, 40589 Düsseldorf (DE)
(72) Erfinder: MISIAK, Hanns, Roland, D-30974 Wennigsen (DE); GRUBER, Werner, D-41352 Korschenbroich (DE); BEHN, Dagmar, D-40627 Düsseldorf (DE); GOLOLOBOV, Yuri, Moscow 11783 (RU)
(86) Internationale Anmeldenummer: EP9805051
(87) Internationale Veröffentlichungsnummer: WO99009106

(56) Entgegenhaltungen:
- US-A- 4 634 644
- PATENT ABSTRACTS OF JAPAN vol. 012, no. 263, 22. Juli 1988 & JP 63 046282 A (SEMEDAIN KK), 27. Februar 1988
- PATENT ABSTRACTS OF JAPAN vol. 018, no. 291, 3. Juni 1994 & JP 06 057215 A (TAOKA CHEM. CO. LTD.), 1. März 1994

## Beschreibung

Die Erfindung betrifft eine Cyanacrylat-Klebstoff-Zusammensetzung für thermostabile Cyanacrylat-Verklebungen sowie deren Herstellung und Verwendung.

Cyanacrylat-Klebstoffe sind einkomponentige Reaktionsklebstoffe auf der Basis von monomeren 2-Cyanoacrylsäureestern. Sie haben sich den Markt durch ihre äußerst schnelle Aushärtung erobert, je nach Klebstoffzusammensetzung, Substrat und Geometrie der Klebefuge beträgt die Aushärtung nur wenige Sekunden. Die resultierenden Eigenschaften der Verklebung erfüllen viele der in der industriellen Praxis gestellten Anforderungen. Trotzdem sind sie in speziellen Anwendungsfällen noch verbesserungsbedürftig. Bekanntlich haben die Cyanacrylate eine sehr niedrige Ceiling-Temperatur. Aus diesem Grunde ist z.B. schon bei längerer Temperaturbelastung der Verklebung um 100 °C eine Depolymerisation möglich, deshalb vertragen mit herkömmlichen Cyanacrylat-Klebstoffen gefügte Verklebungen keine längeren Temperaturbelastungen von mehr als 80 °C.

Es gibt bereits mehrere Vorschläge, die Temperaturbelastbarkeit von Cyanacrylat-Verklebungen zu verbessern. Gemäß der DE 3220591 erhält man Cyanacrylat-Klebstoffe mit verbesserten thermischen Eigenschaften, wenn man a) mindestens polymerisierbares Cyanacrylat-Monomer, b) 0,1 bis 10 Gew.-% mindestens eines polymerisierbaren Acrylatesters und c) 0,1 bis 20 Gew.-% eines Zusatzes wie z.B. Maleinimid zu einer Klebstoffzusammensetzung mischt.

Gemäß der EP-A-579476 sollen cyclische oder lineare Schwefelverbindungen der allgemeinen Formel

R¹O-SO₂-OR¹, R¹O-SO-OR¹, R¹-SO-R¹, R¹SO-OR¹,

in der R1 eine monovalente Kohlenwasserstoff-Gruppe ist, die ggf. mit Halogen-, NO₂-, Oxo-, CN-, Alkoxy-, Hydroxy-, Acyloxy- oder SO₂- Gruppen substituiert ist,
in einer Menge von etwa 0,1 bis 10 Gew.-% zu den Cyanacrylaten zugegeben werden.

Die WO 94/15907 beschreibt Cyanacrylat-Klebstoffe mit verbesserter Beständigkeit gegen Wärme und Feuchtigkeit. Dort wird vorgeschlagen, den Cyanacrylat-Monomeren lineare Polymere auf der Basis von Polyisobutylen oder Polyalkylmethacrylaten mit Cyanacrylat-Endgruppen zuzufügen. Konkrete Angaben über die Klebstoff-Zusammensetzung und ihre Klebeeigenschaften werden nicht gemacht.

Die DE-A-19519958 beschreibt Cyanacrylat-Klebstoffe mit verbesserter Wärmebelastbarkeit. Gemäß der Lehre dieser Schrift soll den üblichen Monocyanacrylsäureestern noch eine wirksame Menge eines Biscyanacrylates zugefügt werden. Dabei sollen die Biscyanacrylate durch Reaktion von 2-Cyanacrylsäure oder deren Alkylester mit Diolen in Gegenwart von Sulfonsäuren als Katalysator in Lösung hergestellt werden. Dieser Zusatz von Biscyanacrylaten erhöht zwar die Wärmebeständigkeit derartiger Klebstoffe, zur Erzielung der notwendigen Lagerstabilität der Klebstoff-Zusammensetzungen müssen die Biscyanacrylate jedoch eine sehr hohe Reinheit besitzen. Dies bedeutet, daß ihre Herstellung aufwendig und daher nicht sehr wirtschaftlich ist.

Die noch unveröffentlichte DE 19640202 schlägt den Zusatz von 2-Cyanopentadiensäurealkylestern zu einem üblichen monomeren 2-Cyanacrylsäureester oder Mischungen von 2-Cyanacrylsäureestern vor. Zusätzlich soll noch eine wirksame Menge an mindestens einem Alkylen-bis(2-cyanopentadienoat) vorhanden sein. Es wird darauf hingewiesen, daß die Alkylen-bis(2-cyanopentadienoate) besonders rein sein müssen.

Ausgehend von diesem Stand der Technik ergab sich als Aufgabe, einen Cyanacrylat-Klebstoff bereitzustellen, der eine deutliche Erhöhung der Temperaturbelastbarkeit derartig hergestellter Verklebungen gewährleistet. Weiterhin soll dieser Klebstoff gegenüber den herkömmlichen Cyanacrylat-Klebstoffen ein unverändert gutes Lagerverhalten besitzen und trotzdem eine akzeptable kurze Aushärtungszeit ermöglichen.

Die erfindungsgemäße Lösung ist den Patentansprüchen zu entnehmen. Sie besteht im wesentlichen darin, daß die Cyanacrylat-Klebstoff-Zusammensetzung neben mindestens einem üblichen Monocyanoacrylsäureester noch Di- oder Polyisocyanate und Bisphenole enthält.

Unter "üblichen Monocyanoacrylsäureester" sind folgende Stoffe der allgemeinen Formel I zu verstehen:

H₂C = C(CN)-CO-O-R (I).

In ihr ist R eine Alkyl-, Alkenyl-, Cycloalkyl-, Aryl-, Alkoxyalkyl-, Aralkyl- oder Haloalkylgruppe, insbesondere eine Methyl-, Ethyl-, n-Propyl-, iso-Propyl-, n-Butyl-, iso-Butyl-, Pentyl-, Hexyl-, Allyl-, Methallyl-, Crotyl-, Propargyl-, Cyclohexyl-, Benzyl-, Phenyl-, Cresyl-, 2-Chorethyl-, 3-Chlorpropyl-, 2-Chlorbutyl-, Trifluorethyl-, 2-Methoxyethyl-, 3-Methoxybutyl- und 2-Ethoxyethylgruppe. Die vorgenannten Cyanoacrylate sind dem Klebstoffachmann bekannt, vgl. Ullmann's Encyclopaedia of Industrial Chemistry, Band. A1, S. 240, Verlag Chemie Weinheim (1985) sowie US-PS 3 254 111 und US-PS 3 654 340. Bevorzugte Monomere sind die Allyl-, Methoxyethyl-, Ethoxyethyl-, Methyl-, Ethyl-, Propyl-, Isopropyl- oder Butyl-Ester der 2-Cyanoacrylsäure. Die Monocyanoacrylsäureester stellen den größten Gewichtsanteil der polymerisierbaren Monomeren im Klebstoff dar.

Als erfindungsgemäß einzusetzende Isocyanat-Verbindungen finden bevorzugt die folgenden Diisocyanate Verwendung: 4,4'-Diphenylmethandiisocyanat (MDI), 2,4'-Diphenylmethandiisocyanat, Gemisch der isomeren MDI, Toluylendiisocyanat (TDI), 1-Isocyanatomethyl-3-isocyanato-1,5,5-Trimethylcyclohexan (Isophorondiisocyanat, IPDI) m- oder p-Tetramethylxylendiisocyanat(m- oder p-TMXDI), 4,4'-Dicyclohexylmethandiisocyanat (H₁₂ MDI), Dimerfettsäure-Diisocyanat oder deren Mischungen. Ganz besonders bevorzugt ist dabei das MDI. Außerdem lassen sich auch Polyisocyanate mit höherer Funktionalität als 2 einsetzen, beispielhaft erwähnt sei das aus der DE-1285988 bekannte Phosphoryltriisocyanat sowie der Thiophosphorsäure-tris-(p-isocyanto-phenylester), das Triphenylmethan-4,4',4"-triisocyanat sowie die verschiedenen isomeren trifunktionellen Homologen des Diphenylmethandiisocyanats (MDI).

Bisphenole im Sinne der vorliegenden Erfindung sind die aromatischen Dihydroxyverbindungen wie Bisphenol A, Bisphenol F, Bis(hydroxy-diphenyl), Isomere des Dihydroxynaphthalin (isomerenrein oder Mischung mehrerer Isomerer), Isomere des Dihydroxyanthracens (isomerenrein oder Mischung mehrerer Isomerer), Hydrochinon, Resorcin, Brenzcatechin, 2,2-Bis(4-hydroxyphenyl)butan oder deren Mischungen.

Eine equimolare Mischung aus Diisocyanat und Bisphenol wird der Cyanacrylat-Klebstoff-Mischung in Mengen von 2 bis zu 25 Gew.-%, vorzugsweise 2 bis zu 15 Gew.-% zugesetzt. Ganz besonders bevorzugt ist ein Bereich von 2 bis 10 Gew.-%. Vorzugsweise liegen die Dioder Triisocyanate und die Bisphenole in gleichen molaren Mengen vor.

Weiterhin kann die Klebstoff-Zusammensetzung weitere an sich bekannte Additive enthalten wie z.B. Weichmacher, Verdicker, Stabilisatoren, Farbstoffe, oder Beschleuniger Vorzugsweise enthält der Klebstoff an sich bekannte Stabilisatoren wie z.B. Hydrochinon und/oder Schwefeldioxid und/oder Bortrifluorid. Auch können bei dem Einsatz des Klebstoffes zur Herstellung von Verklebungen an sich bekannte Primer zur Oberflächenvorbehandlung der Substrate eingesetzt werden.

Der Klebstoff wird wie üblich durch Mischen und/oder Auflösen der Komponenten der jeweiligen erfindungsgemäßen Zusätze sowie der Diisocyanate und Bisphenole bei Raumtemperatur hergestellt. Die Lagerstabilität der neuen Klebstoffe beträgt bei 60 °C mehr als 3 Tage, was einer Lagerstabilität von über 3 Monaten bei Raumtemperatur entspricht.

Der erfindungsgemäße neue Cyanacrylatklebstoff eignet sich besonders für Verklebungen mit hohen thermischen Anforderungen z.B. zum thermostabiler Verkleben von elektrischen und elektronischen oder optischen Bauteilen. Die so verklebten Substrate weisen die folgenden Vorteile gegenüber mit herkömmlichen Cyanacrylaten verklebten Substraten auf:
- eindeutige Erhöhung der Temperaturbelastbarkeit der Cyanacrylat-Verbindungen
- Verbesserung der Temperaturbeständigkeit (Durability) von mit Cyanacrylatklebstoffen verklebten Verbindungen
- Reduzierung der Sprödigkeit typischer Polycyanacrylate durch den Einbau weniger spröder Polyurethane in die Polymermatrix
- Erzielung elastifizierter (toughened) Cyanacrylate, da durch die Auswahl des Bisisocyanates flexiblere Polyurethane möglich sind
- die Haftung zu verschiedenen Materialien, insbesondere Kunststoffen wird durch den in situ generierten Polyurethananteil deutlich verbessert
- Erhöhung der Leistungsfähigkeit der Cyanacrylatklebstoffe bei gleichzeitiger Reduzierung der Herstellkosten, da die erfindungsgemäßen Zusätze preiswerter sind als die gemäß Stand der Technik vorgeschlagenen Bis-cyanacrylate oder Cyanopentadienoate.

Vorteilhaft ist weiterhin, daß durch die erfindungsgemäßen Zusätze die Polymerisationsgeschwindigkeit ― d.h. die Abbindegeschwindigkeit z.B. an EPDM-Substraten ― nur unwesentlich verlängert wird, beispielsweise von 3 Sekunden auf 5 Sekunden. Außerdem wird die Lagerstabilität der Klebstoffzusammensetzung nur unwesentlich beinträchtigt.

### Die Erfindung wird nun anhand von Beispielen im einzelnen erläutert:

### Beispiele 1 bis 7:

Zu einem handelsüblichen mit Polymethylmethacrylat als Verdicker versetzten Cyanacrylsäureethylester, der auf übliche Weise stabilisiert war (Sicomet 63, Firma Sichel) wurden 2,5 Gew.-% bis 10 Gew.-% von equimolaren Mengen an 4,4'-Diphenylmethandiisocyanat + Bis(4-hydroxyphenyl)sulphon (M/S) bzw. 4,4'-Diphenylmethandiisocyanat + Bisphenol-A (M/A) bzw. Toluylendiisocyanat (TDI) + Bisphenol-A (T/A) hinzugefügt und homogen gelöst. Eine dreitägige Lagerung dieser Zusammensetzungen bei 60 °C bewirkte keine signifikante Viskositätserhöhung, d.h. es ist davon auszugehen, daß diese Mischungen mindestens 3 Monate bei Raumtemperatur lagerstabil sind.

Es wurden Verklebungen von sandgestrahlten Aluminiumblechen hergestellt, an denen Zugscherfestigkeiten nach Raumtemperaturlagerung sowie nach thermischer Belastung der Verklebung durchgeführt wurden.

Die Ergebnisse der Zugscherfestigkeitstests sind in der nachfolgenden Tabelle im Vergleich zu nicht modifizierten Sicomet 63 aufgeführt.

**Tabelle 1:**

| **Beispiel** | **Zusammensetzung**^{**1**} | **RT**^{**2**} | **130°C**^{**3**} | **130/130°C**^{**4**} |
|---|---|---|---|---|
| 1 | 2,5 %M/S | 9 | 3 | 1,3 |
| 2 | 5 % M/S | 6 | 2 | 2 |
| 3 | 2,5 % M/A | 15,9 | 1,2 | 1,7 |
| 4 | 5 % M/A | 14,8 | 1,5 | 2,6 |
| 5 | 10 % M/A | 15,8 | 2,2 | 0,7 |
| 6 | 2,5 % T/A | 10,3 | 1,2 | 0,7 |
| 7 | 5 % T/A | 10,8 | 1,4 | 0,9 |
| Vergleich | Sicomet 63 unmodifiziert | 15,5 | 0,6 | 0,9 |

| | | | | |
|---|---|---|---|---|
| 1.) Zusatz von x Gew.-% einer equivalenten Menge an Diisocyanat und Bisphenol | | | | |
| 2.) Zugscherfestigkeit in N/mm² bei Raumtemperatur | | | | |
| 3.) Aufheizen der verklebten Substrate auf 130 °C und Bestimmung der Zugscherfestigkeit in N/mm² | | | | |
| 4.) Aufheizen der verklebten Substrate auf 130 °C und Lagern 1 Tag bei 130 °C, danach Bestimmung der Zugscherfestigkeit | | | | |

Aus den vorstehenden Versuchen geht deutlich hervor, daß die Cyanacrylatklebstoff-Zusammensetzungen, die die erfindungsgemäßen Zusätze von Diisocyanat und Bisphenol enthalten bei hohen Temperaturen eine signifikant höhere Zugscherfestigkeit aufweisen als die unmodifizierten Verklebungen.

## Patentansprüche

1. Cyanacrylat-Klebstoff-Zusammensetzung für thermostabile Cyanacrylat-Verklebungen auf der Basis von Estern der Monocyanoacrylsäure der allgemeinen Formel I
H₂C = C(CN)-CO-O-R (I),
in der R eine Alkyl-, Alkenyl-, Cycloalkyl-, Aryl-, Alkoxyalkyl-, Aralkyl- oder Haloalkylgruppe ist,
**dadurch gekennzeichnet, daß** sie Diisocyanate und Bisphenole enthält.

2. Cyanacrylat-Klebstoff-Zusammensetzung nach Anspruch 1, **dadurch gekennzeichnet, daß** in der Formel (I) R eine Methyl-, Ethyl-, n-Propyl-, iso-Propyl-, n-Butyl-, iso-Butyl-, Pentyl-, Hexyl-, Allyl-, Methallyl-, Crotyl-, Propargyl-, Cyclohexyl-, Benzyl-, Phenyl-, Cresyl-, 2-Chorethyl-, 3-Chlorpropyl-, 2-Chlorbutyl-, Trifluorethyl-, 2-Methoxyethyl-, 3-Methoxybutyl- und 2-Ethoxyethylgruppe ist.

3. Cyanacrylat-Klebstoff nach Anspruch 1 oder 2, **dadurch gekennzeichnet, daß** Diisocyanate und Bisphenole in gleichen molaren Mengen vorliegen.

4. Cyanacrylat-Klebstoff nach Anspruch 1 bis 3 **dadurch gekennzeichnet, daß** er 2 bis zu 25 Gew.-% einer equimolaren Mischung aus Diisocyanat und Bisphenol enthält.

5. Cyanacrylat-Klebstoff nach Anspruch 1 bis 3 **dadurch gekennzeichnet, daß** er 2 bis zu 15 Gew.-% einer equimolaren Mischung aus Diisocyanat und Bisphenol enthält.

6. Cyanacrylat-Klebstoff Anspruch 1 bis 3 **dadurch gekennzeichnet, daß** er 2 bis 10 Gew.-% einer equimolaren Mischung aus Diisocyanat und Bisphenol enthält.

7. Cyanacrylat-Klebstoff nach einem der vorhergehenden Ansprüche, **dadurch gekennzeichnet, daß** das Diisocyanat ausgewählt wird aus 4,4'-Diphenylmethandiisocyanat (MDI), 2,4'-Diphenylmethandiisocyanat, Gemisch der isomeren MDI, Toluylendiisocyanat (TDI), 1-Isocyanatomethyl-3-isocyanato-1,5,5-Trimethylcyclohexan (Isophorondiisocyanat, IPDI) m- oder p-Tetramethylxylendiisocyanat(m- oder p-TMXDI), 4,4'-Dicyclohexylmethandiisocyanat (H₁₂ MDI), Dimerfettsäure-Diisocyanat oder deren Mischungen.

8. Cyanacrylat-Klebstoff nach einem der vorhergehenden Ansprüche, **dadurch gekennzeichnet, daß** das Bisphenol ausgewählt wird aus Bisphenol A, Bisphenol F, Bis(hydroxy-diphenyl), Isomere des Dihydroxynaphthalin (isomerenrein oder Mischung mehrerer Isomerer), Isomere des Dihydroxyanthracens (isomerenrein oder Mischung mehrerer Isomerer), Hydrochinon, Resorcin, Brenzcatechin, 2,2-Bis(4-hydroxyphenyl)butan oder deren Mischungen.

9. Verwendung der Cyanacrylat-Klebstoffe nach mindestens einem der Ansprüche 1 bis 8 zum thermostabilen Verkleben von elektrischen, elektronischen oder optischen Bauteilen.

10. Verfahren zur Herstellung von Cyanacrylat-Klebstoffen nach mindestens einem der Ansprüche 1 bis 8, **dadurch gekennzeichnet, daß** einer nach herkömmlichen Verfahren hergestellten Zusammensetzung von Estern der Cyanacrylsäure, Diisocyanate und Bisphenole durch Mischen und/oder Auflösen zugefügt werden.

## Claims

1. A cyanoacrylate adhesive composition for heat-stable cyanoacrylate compounds based on esters of monocyanoacrylic acid corresponding to general formula (I):
H₂C=C(CN)-CO-O-R (I)
in which R is an alkyl, alkenyl, cycloalkyl, aryl, alkoxyalkyl, aralkyl or haloalkyl group, **characterized in that** it contains diisocyanates and bisphenols

2. A cyanoacrylate adhesive composition as claimed in claim 1, **characterized in that**, in formula (I), R is a methyl, ethyl, n-propyl, isopropyl, n-butyl, isobutyl, pentyl, hexyl, allyl, methallyl, crotyl, propargyl, cyclohexyl, benzyl, phenyl, cresyl, 2-chloroethyl, 3-chloropropyl, 2-chlorobutyl, trifluoroethyl, 2-methoxyethyl, 3-methoxybutyl and 2-ethoxyethyl group.

3. A cyanoacrylate adhesive as claimed in claim 1 or 2, **characterized in that** diisocyanates and bisphenols are present in equal molar quantities.

4. A cyanoacrylate adhesive as claimed in claims 1 to 3, **characterized in that** it contains 2 to 25% by weight of an equimolar mixture of diisocyanate and bisphenol

5. A cyanoacrylate adhesive as claimed in claims 1 to 3, **characterized in that** it. contains 2 to 15% by weight of an equimolar mixture of diisocyanate and bisphenol

6. A cyanoacrylate adhesive as claimed in claims 1 to 3, **characterized in that** it contains 2 to 10% by weight of an equimolar mixture of diisocyanate and bisphenol,

7. A cyanoacrylate adhesive as claimed in any of the preceding claims, **characterized in that** the diisocyanate is selected from 4,4'- diphenylmethane diisocyanate (MDI), 2,4'-diphenylmethane diisocyanate, a mixture of the isomeric MDI, toluenediisocyanate (TDI), 1-isocyanatomethyl- 3-isocyanato-1,5,5-trimethylcyclohexane (isophorone diisocyanate, m- or p-tetramethyl xylene diisocyanate (m- or p- TMXDI), dicyclohexylmethane diisocyanate (H12 MDI), dimer fatty acid diisocyanate and mixtures thereof.

8. A cyanoacrylate adhesive as claimed in any of the preceding claims, **characterized in that** the bisphenol is selected from bisphenol A, bisphenol F, bis-(hydroxydiphenyl), isomers of dihydroxynaphthalene (pure isomer or mixture of several isomers), isomers of dihydroxyanthracene (pure isomer or mixture of several isomers), hydroquinone, resorcinol, pyrocatechol, 2,2- bis-(4-hydroxyphenyl)-butane or mixtures thereof.

9. The use of the cyanoacrylate adhesives as claimed in at least one of claims 1 to 8 for the heat-stable bonding of electric, electronic or optical components.

10. A process for the production of the cyanoacrylate adhesives claimed in at least one of claims 1 to 8, **characterized in that** diisocyanates and bisphenols are added by mixing and/or dissolving to a conventionally produced composition of esters of cyanoacrylic acid.

## Revendications

1. Composition adhésive à base de cyanoacrylate pour des collages thermostables de cyanoacrylate à base d'esters d'acide monocyanoacrylique de formule générale I
H₂C = C(CN)-CO-O-R (I)
dans laquelle R est un groupe alkyle, alkényle, cycloalkyle, aryle, alkoxyalkyle, aralkyle ou haloalkyle,
**caractérisée en ce qu'**
elle contient des diisocyanates et des bisphénols.

2. Composition adhésive à base de cyanoacrylate selon la revendication 1,
**caractérisée en ce que**
dans la formule (I) R est un groupe méthyle, éthyle, n-propyle, isopropyle, n-butyle, isobutyle, pentyle, hexyle, allyle, méthallyle, crotyle, propargyle, cyclohexyle, benzyle, phényle, crésyle, 2-chloroéthyle, 3-chloropropyle, 2-chlorobutyle, tri-fluoroéthyle, 2-méthoxyéthyle, 3-méthoxybutyle, et 2-éthoxyéthyle.

3. Adhésif au cyanoacrylate selon la revendication 1 ou la revendication 2,
**caractérisé en ce que**
les diisocyanates et les bisphénols sont présents en quantités molaires identiques.

4. Adhésif au cyanoacrylate selon l'une quelconque des revendications 1 à 3,
**caractérisé en ce qu'**
il contient de 2 à 25 % en poids d'un mélange équimolaire de diisocyanate et de bisphénol.

5. Adhésif au cyanoacrylate selon l'une quelconque des revendications 1 à 3,
**caractérisé en ce qu'**
il contient de 2 à 15 % en poids d'un mélange équimolaire de diisocyanate et de bisphénol.

6. Adhésif au cyanoacrylate selon l'une quelconque des revendications 1 à 3,
**caractérisé en ce qu'**
il contient de 2 à 10 % en poids d'un mélange équimolaire de diisocyanate et de bisphénol.

7. Adhésif au cyanoacrylate selon l'une quelconque des revendications précédentes,
**caractérisé en ce que**
le diisocyanate est choisi parmi le 4,4'-diphénylméthanediisocyanate (MDI), le 2,4'-diphénylméthanediisocyanate, un mélange des isomères de MDI, le toluylènediisocyanate (TDI), le 1-isocyanatométhyl-3-isocyanato-1,5,5-triméthylcyclohéxane (isophoronediisocyanate, IPDI), le m- ou p-tétraméthylxylènediisocyanate(m- ou p-TMXDI), le 4,4'-dicyclohéxylméthanediisocyanate (H₁₂ MDI), le diisocyanate d'acide gras dimère ou leurs mélanges.

8. Adhésif au cyanoacrylate selon l'une quelconque des revendications précédentes,
**caractérisé en ce que**
le bisphénol est choisi parmi le bisphénol A, le bisphénol F, le bis(hydroxydiphényl), les isomères de dihydroxynaphtalènes (isomère pur ou mélange de plusieurs isomères), les isomères de dihydroxyanthracène ( isomère pur ou mélange de plusieurs isomères), hydroquinone, résorcinol, pyrocatéchine, 2,2-bis(4-hydroxyphényl)butane ou leurs mélanges.

9. Utilisation des adhésifs au cyanoacrylate selon au moins l'une quelconque des revendications 1 à 8 en vue du collage thermostable de pièces de construction électriques, électroniques ou optiques.

10. Procédé de production d'adhésifs au cyanoacrylate selon au moins l'une quelconque des revendications 1 à 8,
**caractérisé en ce qu'**
à une composition préparée selon les procédés traditionnels des esters d'acide cyanoacrylique, on ajoute des diisocyanates et des bisphénols par mélange et/ou mise en solution.
